(19) **Europäisches Patentamt / European Patent Office / Office européen des brevets**

(11) **EP 2 368 624 B1**

(12) **EUROPÄISCHE PATENTSCHRIFT**

(45) Veröffentlichungstag und Bekanntmachung des Hinweises auf die Patenterteilung:
**10.08.2016 Patentblatt 2016/32**

(51) Int Cl.:
***B01D 61/06*** *(2006.01)* ***B01D 61/12*** *(2006.01)*
***C02F 1/44*** *(2006.01)*

(21) Anmeldenummer: **11159409.9**

(22) Anmeldetag: **23.03.2011**

(54) **Anlage und Verfahren zur Behandlung einer Flüssigkeit mittels Umkehrosmose**

Assembly and method for treatment of a liquid by reverse osmosis

Installation et procédé de traitement d'un liquide par osmose inverse

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.03.2010 DE 102010012671**
**23.03.2011 DE 102011005964**

(43) Veröffentlichungstag der Anmeldung:
**28.09.2011 Patentblatt 2011/39**

(73) Patentinhaber: **KSB Aktiengesellschaft**
**67227 Frankenthal (DE)**

(72) Erfinder:
• **Dornseifer, Frieder**
**67269, Grünstadt (DE)**
• **Metz, Raff**
**9687, Surré (LU)**

(56) Entgegenhaltungen:
WO-A1-2010/010243     DE-A1- 2 917 058
DE-C1- 19 922 628     US-A- 3 637 081
US-A1- 2004 173 528

EP 2 368 624 B1

## Beschreibung

Die Erfindung betrifft eine Anlage und ein Verfahren zur Aufbereitung einer Flüssigkeit mittels Umkehrosmose, wobei eine Pumpe einen Feedstrom einer Membraneinheit zuführt und die Membraneinheit den Feedstrom in einen Permeatstrom und einen Retentatstrom trennt, wobei sich der Istwert der Ausbeute der Anlage als Verhältnis von Permeatstrom zu Feedstrom ergibt und der Retentatstrom einer Energierückgewinnungseinheit zugeführt wird, wobei über mindestens einen Sensor Messwerte erfasst und an eine Auswerteeinheit weitergeleitet werden.

Zur Herstellung von zahlreichen Produkten ist eine Aufbereitung von Flüssigkeiten notwendig. Bei Anlagen und Verfahren entsprechend dem Oberbegriff der Erfindung werden dazu Membrantrennverfahren eingesetzt. Deren besonderer Vorteil besteht darin, dass sie ohne Erhitzen auskommen und somit meist energetisch günstiger sind als thermische Trennverfahren. In der Membrantechnik fallen zwei Fraktionen an, die als Retentat und Permeat bezeichnet werden. Der Retentatstrom wird beim Trennprozess von der Membran zurückgehalten. Den Anteil der Flüssigkeit, der durch die Membran durchtritt, bezeichnet man als Permeat.

Die Separation mittels Membranverfahren hat sich insbesondere in der Lebensmitteltechnologie, der Biotechnologie und der Pharmazie etabliert. Je nach Art der verwendeten Membranen ist die selektive Abtrennung einzelner Stoffe oder bestimmter Stoffgemische möglich.

Man unterscheidet die Membrantrennverfahren nach der treibenden Kraft, die der Trennung zugrunde liegt. Bei der vorliegenden Erfindung handelt es sich um druckgetriebene Prozesse, bei denen vorzugsweise Wasser als Lösungsmittel eingesetzt wird.

Eine Pumpe führt die noch unbehandelte Flüssigkeit, die als Feedstrom bezeichnet wird, einer Membraneinheit zu. Membraneinheiten lassen sich modular aufbauen, so dass die Anlage stufenweise an den Umfang eines Trennproblems angepasst werden kann. Die Trennung erfolgt mittels einer semipermeablen Membran. Die Pumpe baut einen Druck vor der semipermeablen Membran auf. Dabei werden das Lösungsmittel und häufig ein Teil der gelösten Stoffe durch die Membran gepresst.

Über die Auswahl der Membran lässt sich die Größe der zurückgehaltenen Stoffe einstellen. Je nach Größe der zurückgehaltenen Moleküle unterscheidet man zwischen Mikrofiltration, Ultrafiltration, Nanofiltration und Umkehrosmose.

Als besonders günstig erweist sich der Einsatz der Erfindung zur Durchführung einer Umkehrosmose, insbesondere zur Meerwasserentsalzung. Wird die konzentrierte Lösung mit einem Druck beaufschlagt, der oberhalb des osmotischen Drucks liegt, diffundieren Wassermoleküle durch die Membran, während die gelösten Salze zurückgehalten werden. Somit wird auf der einen Seite die Salzlösung aufkonzentriert, während auf der anderen Seite salzarmes Wasser gewonnen wird. Zwischen dem angelegten Betriebsdruck und dem sich einstellenden osmotischen Druck stellt sich ein Gleichgewicht ein. Dieser Prozess wird als Umkehrosmose (engl. Reverse Osmosis - RO) bezeichnet und zur Meerwasserentsalzung genutzt.

Die Meerwasserentsalzung bietet heutzutage eine gute Möglichkeit, Trinkwasser in süßwasserarmen Regionen mit Meeresanbindung kostengünstig in ausreichender Menge zur Verfügung zu stellen. Häufig werden kleinere Pumpanlagen benötigt, da sich ein Trend zur dezentralen Anlage als autarke Trinkwasserversorgung abzeichnet. Die Produktionskapazität der erfindungsgemäßen Anlage beträgt vorzugsweise weniger als $1000m^3$ Permeat pro Tag. Als Ausbeute der Anlage bezeichnet man das Verhältnis von Permeat- zu Feedstrom. Der Istwert der Ausbeute kann durch Messung des Permeatstroms und des Feedstroms bestimmt werden.

Damit eine Umkehrosmose stattfindet und somit ausreichend Trinkwasser produziert wird, muss ein gewisser Arbeitsdruck auf der Seite des Meerwassers aufgebracht werden. Dieser Druck wird mittels einer Hochdruckpumpe bereitgestellt. Es gibt eine Vielzahl von Pumpenarten, die den nötigen Druck erzeugen können. Am häufigsten werden Verdrängerpumpen, insbesondere Kolben- oder Membranpumpen, und Kreiselpumpen verwendet.

Der Retentatstrom wird nach Verlassen der Membraneinheit einer Energierückgewinnungseinheit zugeführt. Diese dient der Rückgewinnung der im Retentat vorhandenen potentiellen Energie. Durch das Zurückführen dieser Energie ist es möglich, den Energiebedarf einer Meerwasserentsalzungsanlage zu verringern. Dabei sind unterschiedlichste Konfigurationen von Pumpen und Energierückgewinnungseinheiten im Einsatz. Eine weit verbreitete Form ist eine Konfiguration mit einer Booster-Pumpe und einem Drucktauscher.

Membranverfahren zur Aufbereitung von Flüssigkeiten sind häufig automatisiert. Über Sensoren werden Messwerte erfasst und an eine Auswerteeinheit weitergeleitet. Bei den Sensoren handelt es sich um Messaufnehmer bzw. Messfühler. Die Messgrößen werden mittels physikalischer oder chemischer Effekte erfasst und in weiterverarbeitbare Größen, meist elektrische Signale, umgeformt. Der Begriff Aufnehmer, bzw. Messgrößen-Aufnehmer, wird verstanden als der Teil einer Messeinrichtung, der auf eine Messgröße unmittelbar anspricht.

Die Auswerteeinheit kann einzelne Komponenten der Anlage ansteuern. Als Auswerteeinheiten können handelsübliche Regler, beispielsweise PID-Regler, eingesetzt werden. Auch der Einsatz einer speicherprogrammierbaren Steuerung (SPS) ist möglich.

Die WO 2007/090406 A1 zeigt eine Umkehrosmose-Anlage zur Bereitstellung von Süßwasser aus Salzwasser.

Eine Pumpe bringt das Salzwasser auf den in einer Membraneinheit erforderlichen Druck. Nach der Membraneinheit fließt das Retentat durch eine Druckrückgewinnungseinheit. Die Druckrückgewinnungseinheit ist mit einer Pumpe verbunden. Über Drucksensoren wird der Druck vor Eintritt des Feedstroms in die Membraneinheiten und nach Austritt des Retentatstroms aus den Membraneinheiten gemessen. Die Drehzahl eines Motors, der in Wirkverbindung mit der Pumpe und der Druckrückgewinnungseinheit steht, wird in Abhängigkeit der Differenz dieser Drücke geregelt. Bei solchen Anlageregelungen, nach dem Stand der Technik, werden zahlreiche Faktoren, welche den Umkehrosmose Prozess beeinflussen, nicht berücksichtigt.

Aus der WO 2010/010243 A1 ist eine Umkehrosmose-Wasserentsalzungsanlage bekannt, die eine Umkehrosmose-Membraneinheit, wenigstens eine Hochdruckpumpe, einen Energieumsetzer nach dem Drucktauscherprinzip, der den Druck von dem die Membraneinheit verlassenden Konzentrat zu einem Teil des zu behandelnden Wassers überträgt, und Sensoren für verschiedene Betriebsparameter umfasst. Die Anlage weist ferner Regelkreise auf, damit die verschiedenen einstellbaren Elemente auf einem Sollwert bleiben. Außerdem umfasst die Anlage ein sekundäres Kontrollsystem mit einer Rechnungseinheit, derart programmiert, eine Kombination von Sollwerten für die Flussmenge der Hochdruckpumpe, das Mischverhältnis des Energieumsetzers und das Umsetzverhältnis bzw. Ausbeute auf Basis der durch die Sensoren gelieferten Betriebszustände zu bestimmen.

Der Aufbau dieser Anlage ist sehr komplex, da zwei Regelkreise vorgesehen sind. Ein Regelkreis sorgt für den optimalen Betrieb und der andere überwacht die Anlage hinsichtlich ihrer Funktionstauglichkeit.

Die US 3,637,081 zeigt eine Flüssigkeitsaufbereitungsanlage mit Drucktauscherpumpen zur Zwangssteuerung eine Umkehrosmose-Flüssigkeitsreinigung, die frei von Korrosions- und Übersättigungsproblemen ist.

Die Ausbeute der Anlage ist nur durch umständliches Ändern von Scheibendurchmessern oder Zahnradgrößen oder durch den Einsatz eines teuren Regelgetriebes veränderbar.

Aus der DE 29 17 058 A1 ist ein Verfahren zur Entsalzung bzw. Teilentsalzung von salzhaltigem Wasser unter Anwendung der Umkehrosmose bekannt. Die Dokumente WO 2010/010243, US 3,637,081 und DE 29 17 058 diskutieren bereits eine Steuerung der Ausbeute zur energieoptimierten Betriebsweise der Umkehrosmoseanlagen.

Aufgabe der Erfindung ist es, eine Regelung für Anlagen zur Aufbereitung von Flüssigkeiten durch Membrantrennverfahren zur Verfügung zu stellen, die zu einer weiteren Reduzierung der Betriebskosten beiträgt.

Diese Aufgabe wird erfindungsgemäß durch die Merkmale der kennzeichnenden Teile der Ansprüche 1 und 8 gelöst.

Bei der vorliegenden Erfindung ermittelt die Auswerteeinheit die optimale Ausbeute, bei der sich die Anlage mit einem minimalen spezifischen Energiebedarf betreiben lässt. Erfindungsgemäß wird die für den spezifischen Energiebedarf optimale Ausbeute als Führungsgröße zugrunde gelegt.

Als wesentliche Einflussparameter auf den spezifischen Energiebedarf der Anlage werden der Förderdruck, die Reibungsverluste, der Wirkungsgrad der Pumpe und der Rückgewinnungseinheit, die Ausbeute und der Rückhalt herangezogen.

Zur Herstellung eines funktionalen Zusammenhangs zwischen dem spezifischen Energiebedarf der Anlage und der Ausbeute, wird der Wirkungsgradverlauf der Pumpe und der Energierückgewinnungseinheit mittels eines Testlaufes der Pumpe bestimmt und als Funktion des Förderdrucks ausgedrückt. Mittels des osmotischen Druckes und den Reibungsverlusten wird der erforderliche Förderdruck bestimmt. Erfindungsgemäß wird eine Funktion für den spezifischen Energieverbrauch der Anlage bereitgestellt, die von der Ausbeute, der Temperatur und dem Salzgehalt abhängt.

Erfindungsgemäß werden zur Herstellung des funktionalen Zusammenhangs zwischen dem spezifischen Energiebedarf $P'$ der Anlage und der Ausbeute $\Phi$ der Wirkungsgradverlauf $\eta_P$ der Pumpe und der Wirkungsgradverlauf $\eta$ der Energierückgewinnungseinheit berücksichtigt. Die Wirkungsgradverläufe lassen sich mittels eines Testlaufes der Pumpe und/oder der Energierückgewinnungseinheit bei Anlageninbetriebnahme bestimmen, indem zu verschiedenen Drücken der jeweilige Wirkungsgrad der Pumpe und/oder der Energierückgewinnungseinheit ermittelt wird Der Wirkungsgrad der Pumpe und der Energierückgewinnungseinheit entspricht dem Verhältnis von abgegebener Leistung zu aufgenommener Leistung. Idealerweise wird dabei bei verschiedenen Drücken jeweils ein elektrischer Leistungswert sowie ein den hydraulischen Gegebenheiten entsprechender Leistungswert ermittelt. Alternativ ist es vorgesehen, bereits bekannte Wirkungsgradverläufe der Pumpe und/oder der Energierückgewinnungseinheit zu verwenden. Der Wirkungsgradverlauf der Pumpe wird vorzugsweise mit der Formel

$$\eta_p = 1 - A \cdot p^B \qquad \text{(Gleichung 1a)}$$

als Funktion des Förderdrucks p der Pumpe ausgedrückt, wobei A und B als Wirkunggrad-Koeffizienten zweckmäßigerweise numerisch ermittelt werden. Dabei ist A ein positiver Wert und B ein negativer Wert. Der Wirkungsgradverlauf der Energierückgewinnungseinheit wird vorteilhaft mittels gleicher Werte A und B angenähert, wobei anstelle des Förderdruckes $p$ der Entspannungsdruck $p_E$, der über die Energierückgewinnungseinheit abgebaut wird, verwendet wird:

$$\eta_T = 1 - A \cdot p_E^{\ B} \qquad \text{(Gleichung 1b)}.$$

In den Zusammenhang für den spezifischen Energiebedarf P'

$$P' = \frac{p}{\Phi \cdot \rho_R}\left(\frac{1}{\eta_P} - (1 - \Phi) \cdot \frac{p_E}{p} \cdot \eta_T\right) \qquad \text{(Gleichung 1c)}$$

werden der Wirkungsgradverlauf der Pumpe $\eta_P$ und der Wirkungsgradverlauf der Energierückgewinnungseinheit $\eta_T$ eingesetzt. Weiterhin werden der Reibungsdruck in Rohrleitungen und der Membraneinheit $\Delta p_R$ berücksichtigt. Der osmotische Druck am Ende der Membraneinheit wird durch den Term

$$b \cdot w_{F\alpha} \cdot \left(1 + \frac{\Phi \cdot R_{tot}}{1 - \Phi}\right)$$

berücksichtigt.

Ein funktionaler Zusammenhang zwischen dem spezifischen Energiebedarf und der Ausbeute wird vorzugsweise über die folgende Gleichung hergestellt

$$P' = \frac{\left[k \cdot b \cdot w_{F\alpha} \cdot \left(1 + \frac{\Phi \cdot R_{tot}}{1 - \Phi}\right) + \Delta p_R\right]}{\Phi \cdot \rho_R} \cdot$$

$$\left\{ \frac{1}{\left(1 - A \cdot \left(k \cdot b \cdot w_{F\alpha} \cdot \left(1 + \frac{\Phi \cdot R_{tot}}{1 - \Phi}\right) + \Delta p_R\right)^B\right)} \right.$$

$$\left. - (1 - \Phi) \cdot \frac{k \cdot b \cdot w_{F\alpha} \cdot \left(1 + \frac{\Phi \cdot R_{tot}}{1 - \Phi}\right)}{k \cdot b \cdot w_{F\alpha} \cdot \left(1 + \frac{\Phi \cdot R_{tot}}{1 - \Phi}\right) + \Delta p_R} \cdot \left(1 - A \cdot \left(k \cdot b \cdot w_{F\alpha} \cdot \left(1 + \frac{\Phi \cdot R_{tot}}{1 - \Phi}\right)\right)^B\right) \right\}$$

(Gleichung 1).

Im osmotischen Koeffizienten b ist die Temperatur T berücksichtigt. Ein zweckmäßiger Zusammenhang ist durch folgende Gleichung gegeben: $b = b' \cdot \frac{T}{298\,\text{K}}$

(Gleichung 2).

Dabei ist $R_{tot}$ als Rückhalt der Membran gegeben durch:

$$R_{tot} = 1 - \frac{w_P}{w_{F\alpha}} \qquad \text{(Gleichung 1d)}$$

| | | |
|---|---|---|
| $A$ | Wirkungsgrad Koeffizient | $[bar^{-b}$ |
| $b$ | Osmotischer Koeffizient | |
| | | $\left[\dfrac{bar}{Gew.\%}\right]$ |
| $b'$ | Osmotische Konstante (bei 25°C) | |
| | | $\left[\dfrac{bar}{Gew.\%}\right]$ |
| $B$ | Wirkungsgrad Koeffizient | [-] |
| $k$ | Sicherheitsfaktor | [-] |
| $P'$ | Spezifischer Energiebedarf | |
| | | $\left[\dfrac{kW \cdot s}{t}\right]$ |
| $R_{tot}$ | Rückhalt der Membran | [-] |
| $T$ | Temperatur | [K] |
| $\Delta p_R$ | Druckverluste durch Reibung | [bar] |
| $\Phi$ | Ausbeute | [-] |
| $\rho_R$ | Dichte Retentat | |
| | | $\left[\dfrac{kg}{m^3}\right]$ |
| $w_P$ | Massenanteil Salz Permeat | |
| $w_{F\alpha}$ | Massenanteil Salz Feed | [Gew.-%] |
| $\eta_P$ | Wirkungsgrad der Pumpe | [-] |
| $\eta_T$ | Wirkungsgrad der Energierückgewinnungseinheit | [Gew.-%] [Gew.-%] [Gew.-%] [-] |
| $p$ | Förderdruck der Pumpe | [bap] |
| $p_E$ | Entspannungsdruck der Energierückgewinnungseinheit | [bar] |

Die Auswerteeinheit ermittelt zu dieser Funktion die Ausbeute, bei welcher die Anlage einen minimalen spezifischen Energiebedarf besitzt.

Der spezifische Energiebedarf $P'$ ist dabei auf das Permeat bezogen.

Bei einer besonders vorteilhaften Ausgestaltung der Erfindung wird die Ausbeute über das Schluckvolumen der Energierückgewinnungseinheit variiert. Dazu kann der Hub und/oder der Verdrängerraum der Energierückgewinnungseinheit variiert werden. Ebenfalls ist es vorgesehen, die Ausbeute über das Verdrängungsvolumen der Pumpe zu variieren. Dazu werden vorzugsweise Verdrängerpumpen eingesetzt, bei denen der Hub und/oder der Verdrängerraum variiert werden.

Bei einer besonders vorteilhaften Variante der Erfindung ermittelt die Auswerteeinheit das Minimum des Energieverbrauchs mittels eines Algorithmus, der über eine Extremwertberechnung das Minimum der Funktion errechnet. Um die optimale Ausbeute hinsichtlich der Energieeffizienz herauszufinden, wird der spezifische Energiebedarf der Anlage nach der Ausbeute abgeleitet und die Extremwertberechnung durchgeführt.

Erfindungsgemäß dient diese, durch Extremwertberechnung ermittelte, optimale Ausbeute als Führungsgröße zur Steuerung der Anlage. In einem nächsten Schritt errechnet die Auswerteeinheit die Abweichung des Istwerts vom Sollwert. In Abhängigkeit dieser Abweichung werden das Verdrängungsvolumen der Pumpe, insbesondere der Hub der Pumpe, und/oder das Schluckvolumen der Energierückgewinnungseinheit, insbesondere der Hub der Energierückgewinnungseinheit, geregelt. Bei Kreiselpumpen kann eine Schaufelverstellung der Laufräder zur Änderung und/oder Regelung des Volumenstroms führen.

Bei Kreiselpumpen und bei Verdrängerpumpen kann zusätzlich eine Regelung des Volumenstroms und/oder des Druckes über die Drehzahl des Motors, der die Pumpe antreibt, erfolgen. Dazu ist der Motor vorzugsweise mit einem Frequenzumrichter ausgestattet. Der Frequenzumrichter dient zusätzlich beim Anfahren der Pumpe dazu, die Membran zu schonen.

Bei einer besonders vorteilhaften Ausführung der Erfindung werden die Temperatur und der Salzgehalt im Feedstrom gemessen und an die Auswerteeinheit weitergeleitet. Vorzugsweise erfolgt die Messung mit Sensoren, die in einer Zuleitung vor der Pumpe positioniert sind. Der Druck der Flüssigkeit ist vor der Pumpe deutlich geringer als nach der Pumpe. Dadurch können Niederdruckmessgeräte eingesetzt werden, die preiswerter sind als Sensoren, die für hohe Drücke ausgelegt sind.

Bei einer besonders günstigen Ausführung der Erfindung wird der Druck des Feedstroms am Eintritt in die Membraneinheit erfasst. An dieser Stelle hat die Pumpe die Flüssigkeit auf das für die Umkehrosmose erforderliche Druckniveau gebracht. Druckverluste sind an dieser Stelle noch nicht aufgetreten. Weiterhin kann der Druck des Retentatstroms am Austritt aus der Membraneinheit gemessen werden, bevor das Retentat in die Energierückgewinnungseinheit eintritt. Die Signale der Sensoren werden an die Auswerteeinheit weitergeleitet. Die Auswerteeinheit errechnet den Druckverlust in der Membraneinheit, der sich als Differenz der beiden erfassten Drücke ergibt.

Bei einer weiteren Variante der Erfindung wird mittels eines Sensors der Druck des Retentatstroms nach der Energierückgewinnungseinheit erfasst und ebenfalls an die Auswerteeinheit weitergeleitet. Dadurch kann der Grad der Energierückgewinnung ermittelt werden.

Weitere Merkmale und Vorteile der Erfindung ergeben sich aus der Beschreibung eines Ausführungsbeispiels anhand von Zeichnungen und aus den Zeichnungen selbst. Dabei zeigt

Fig. 1     eine schematische Darstellung der Anlage,

Fig. 2     ein Diagramm, in dem die spezifische Energie in Abhängigkeit der Ausbeute bei zwei verschiedenen Salzkonzentrationen im Feed aufgetragen ist.

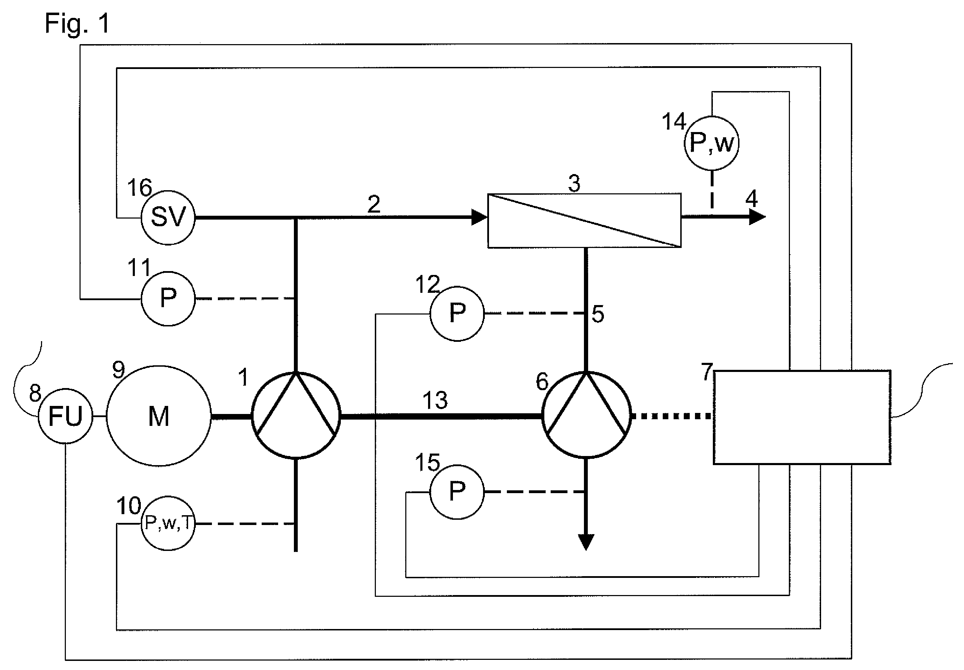

Fig. 1 zeigt eine schematische Darstellung einer Anlage zur Meerwasseraufbereitung. Eine Pumpe 1 führt einen Feedstrom 2 einer Membraneinheit 3 zu. Die Membraneinheit 3 trennt den Feedstrom 2 in einen Permeatstrom 4 und einen Retentatstrom 5. Der Retentatstrom 5 wird anschließend einer Energierückgewinnungseinheit 6 zugeführt.

Ein Sensor 10 erfasst den Salzgehalt und die Temperatur des Feedstroms 2 vor der Pumpe 1. Zusätzlich kann der Druck der Flüssigkeit vor der Pumpe 1 gemessen werden. Sämtliche Messwerte werden an die Auswerteeinheit 7 weitergeleitet. Ein Sicherheitsventil 16 verhindert, dass der Druck vor der Membraneinheit 3 unzulässig hohe Werte annimmt.

Die Auswerteeinheit 7 ermittelt die optimale Ausbeute, bei der die Anlage betrieben werden sollte. Zur Ermittlung der tatsächlichen Ausbeute können der Feedstrom 2 und der Permeatstrom 4 ebenfalls gemessen werden und deren Messwerte an die Auswerteeinheit 7 weitergeleitet werden. Die Auswerteeinheit 7 errechnet den Istwert der Ausbeute als Verhältnis von Permeatstrom 4 zu Feedstrom 2. Weiterhin ermittelt die Auswerteeinheit 7 mittels eines Algorithmus eine optimale Ausbeute als Sollwert, bei der die Anlage mit einem minimalen Energiebedarf betrieben werden kann. Die Abweichung des Istwertes vom Sollwert ergibt eine Regeldifferenz.

Das Schluckvolumen der Energierückgewinnungseinheit 6 wird beispielsweise über deren Hub in Abhängigkeit dieser Regeldifferenz variiert. Alternativ oder ergänzend kann auch das Verdrängungsvolumen der Pumpe 1, beispielsweise über den Hub der Pumpe 1, variiert werden, um die Ausbeute zu optimieren.

Weiterhin kann die Drehzahl des Motors 9 variiert werden. Der Motor 9 der Pumpe 1 ist mit einem Frequenzumrichter 8 versehen. Die Auswerteeinheit 7 steht in Wirkverbindung mit dem Frequenzumrichter 8.

Bei der in Fig. 1 dargestellten Anlage erfasst ein Sensor 11 den Druck in der Zuführleitung des Feedstroms 2 von der Pumpe 1 zur Membraneinheit 3. Ein weiterer Sensor 12 misst den Druck in der Abführleitung des Retentatstroms 5 von der Membraneinheit 3 zur Energierückgewinnungseinheit 6. Die Energierückgewinnungseinheit 6 steht über ein Verbindungselement 13 in Wirkverbindung mit der Pumpe 1. Mittels eines Sensors 14 wird der Salzgehalt und der Druck im Permeatstrom 4 erfasst, der die Membraneinheit 3 verlässt. Ein weiterer Sensor 15 misst den Druck des Retentatstroms 5 nach der Energierückgewinnungseinheit 6. Über die Energierückgewinnungseinheit 6 baut sich der Entspannungdruck $p_E$ ab.

Die Datenverarbeitung in der Auswerteeinheit 7 erfolgt während eines Betriebs der Anlage kontinuierlich nach dem folgenden Schema:

1.) Vor Eintritt in die Pumpe 1 wird das Meerwasser analysiert. Dabei werden die Temperatur T und der Salzgehalt w gemessen. Die Daten werden an die Auswerteeinheit 7 weitergeleitet.

2.) Mittels der Temperatur T und des Salzgehalts w und einem frei gewählten Startwert für die Ausbeute $\Phi_1$, vorzugsweise ein Wert zwischen 30 und 50 %, wird der osmotische Druck am Ende der Membran errechnet.

3.) Unter Berücksichtigung der Druckverluste wird der Druck am Ausgang der Pumpe 1 bestimmt. Wenn die Druckverluste nicht gemessen werden, kann ein bestimmter Wert angenommen werden.

4.) Die Wirkungsgrade der Pumpe 1 und der Energierückgewinnungseinheit 6 werden von der Auswerteeinheit 7 mittels eines Programms berechnet. Dazu werden die im Programm hinterlegten Wirkungsgradverläufe herangezogen.

5.) Alle ermittelten Daten werden in die abgeleitete Funktion des spezifischen Energiebedarfs eingesetzt. Das Programm gibt eine Zahl x aus.

6.) Wenn die Zahl x in einer vorgegebenen Umgebung um 0 liegt, dann ist die Ausbeute optimal, und die Auswertung geht bei Schritt 9.) weiter.

7.) Wenn die Zahl x größer als die vorgegebene Umgebung um 0 ist, dann wird $\Phi_1$ herunter gesetzt. Wenn die Zahl x kleiner als die vorgegebene Umgebung um 0 ist, dann wird $\Phi_1$ hoch gesetzt.

8.) Bei einer Änderung von $\Phi_1$ wird der Vorgang ab Punkt 2.) wiederholt.

9.) Die optimale Ausbeute ist errechnet. Die Auswerteeinheit stellt über das Schluckvolumen der Energierückgewinnungseinheit 6 die errechnete Ausbeute $\Phi_1$, ein.

10.) Die Anlage läuft solange im optimalen Punkt, bis sich der Salzgehalt w bzw. die Temperatur T ändern. Dann wird wieder bei Punkt 1.) angefangen. Wenn die Druckverlust gemessen werden und eine Änderung der Druckverluste auftritt, dann wird ebenfalls wieder bei Punkt 1.) angefangen. Wenn der Vordruck gemessen wird und sich dieser ändert, dann wird ebenfalls wieder bei Punkt 1.) angefangen.

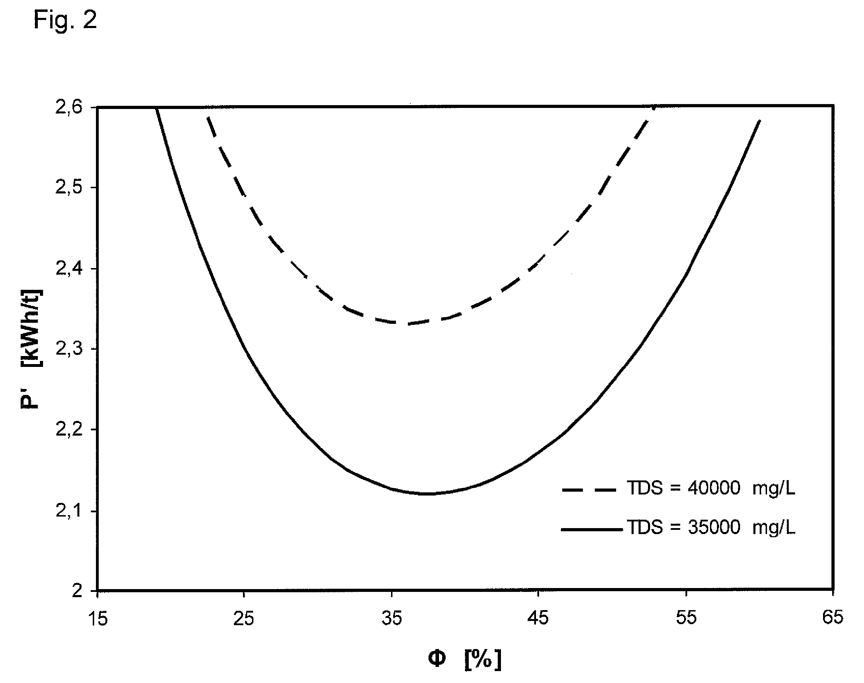

Fig. 2 zeigt den Verlauf des spezifischen Energiebedarfs P' der Anlage bei verschiedenen Ausbeuten $\Phi$. Dieser wird mit den Randbedingungen

$$w_P = 400 \text{ mg/L};$$

$$\Delta p_R = 3 \text{ bar};$$

$$\rho_R = 1 \text{ kg/L};$$

$$k = 1{,}1;$$

$$b = 8 \text{ bar/Gew.-\%};$$

$$T = 298 \text{ K}$$

und mit den Wirkungsgradkoeffizienten

$$A = 1{,}588 \, bar^{0,751};$$

$$B = -0{,}751$$

nach Gleichung 1 berechnet.

Der spezifische Energieverbrauch weist bei einer Ausbeute $\Phi$ von ca. 40 % ein Minimum auf. Bei einem kleineren Salzgehalt $w_{F\alpha}$ (TDS = 35000 mg/L) ist der spezifische Energieverbrauch niedriger als bei höheren Salzgehalten $w_{F\alpha}$ (TDS - 40000 mg/L), Das Minimum des spezifischen Energieverbrauchs verschiebt sich um ca. 0,2 kWh/t, wenn sich die Gesamtsalzkonzentration um 5000 mg/L ändert.

## Patentansprüche

1. Anlage zur Aufbereitung einer Flüssigkeit mittels Umkehrosmose, mit einer Pumpe (1), einer Membran-einheit (3), einer Energierückgewinnungseinheit (6), mindestenes einem Sensor (10, 11, 12, 14, 15) und einer Auswerteeinheit (7), wobei die Pumpe (1), einen Feedstrom (2) der Membraneinheit (3) zuführt und die Membraneinheit (3) den Feedstrom (2) in einen Permeatstrom (4) und einen Retentatstrom (5) trennt, und sich der Istwert der Ausbeute der Anlage als Verhältnis von Permeatstrom (4) zu Feedstrom (2) ergibt und der Retentatstrom (5) der Energierückgewinnungseinheit (6) zugeführt wird, wobei mit mindestens einem Sensor (10, 11, 12, 14, 15) Messwerte erfasst und an eine Auswerteeinheit (7) weitergeleitet werden,

**gekennzeichnet durch**

einen in der Auswerteeinheit (7) implementierten Algorithmus, mittels dem die Auswerteeinheit (7) wenigstens die Wirkungsgrade der Pumpe (1) und der Energierückgewinnungseinheit (6) berechnet und als Sollwert eine optimale Ausbeute ermittelt, bei der sich die Anlage mit einem minimalen spezifischen Energiebedarf betreiben lässt, wobei in der Auswerteeinheit (7) ein funktionaler Zusammenhang zwischen spezifischem Energiebedarf, Ausbeute, Temperatur und Salzgehalt hinterlegt ist und ,

die Auswerteeinheit (7) mittels des osmotischen Druckes und den Reibungsverlusten den erforderliche Förderdruck bestimmt und das Minimum des Energieverbrauchs mittels des Algorithmus ermittelt, der das Minimum des spezifischen Energiebedarfs als Funktion der Ausbeute errechnet, und die Abweichung des Istwerts vom Sollwert errechnet und in Abhängigkeit dieser Abweichung die Ausbeute variiert.

2. Anlage nach Anspruch 1, **dadurch gekennzeichnet, dass** die Ausbeute über das Schluckvolumen der Energierückgewinnungseinheit (6) variiert wird.

3. Anlage nach Anspruch 1 oder 2, **dadurch gekennzeichnet, dass** die Ausbeute über das Verdrängungsvolumen der Pumpe (1) variiert wird.

4. Anlage nach einem der Ansprüche 1 bis 3, **dadurch gekennzeichnet, dass** die Auswerteeinheit (7) mittels eines Algorithmus die optimale Ausbeute aus dem funktionalen Zusammenhang berechnet.

5. Anlage nach einem der Ansprüche 1 bis 4, **dadurch gekennzeichnet, dass** der Salzgehalt und/oder die Temperatur des Feedstroms (2) von Sensoren (10) erfasst und an die Auswerteeinheit (7) weitergeleitet werden, wobei die Auswerteeinheit (7) die optimale Ausbeute in Abhängigkeit des Salzgehaltes und/oder der Temperatur im Feedstrom (2) ermittelt.

6. Anlage nach einem der Ansprüche 1 bis 5, **dadurch gekennzeichnet, dass** über einen Sensor (11) der Druck in der Zuführleitung des Feedstroms (2) von der Pumpe (1) zur Membraneinheit (3) erfasst wird und ein weiterer Sensor (12) den Druck in der Abführleitung des Retentatstroms (5) von der Membraneinheit (3) zur Energierückgewinnungseinheit (6) erfasst, wobei die Messwerte an die Auswerteeinheit (7) weitergeleitet werden und die Auswerteeinheit (7) den Druckverlust in der Membraneinheit (3) ermittelt.

7. Anlage nach einem der Ansprüche 1 bis 6, **dadurch gekennzeichnet, dass** die Pumpe (1) mit der Energierückgewinnungseinheit (6) über ein Verbindungselement (13) in Wirkverbindung steht.

8. Verfahren zur Aufbereitung einer Flüssigkeit, wobei

- eine Pumpe (1) einen Feedstrom (2) einer Membraneinheit (3) zuführt,
- eine Membraneinheit (3) den Feedstrom (2) in einen Permeatstrom (4) und einen Retentatstrom (5) trennt, wobei sich der Istwert der Ausbeute der Anlage als Verhältnis von Permeatstrom (4) zu Feedstrom (2) ergibt,
- der Retentatstrom (5) von der Membraneinheit (3) zu einer Energierückgewinnungseinheit (6) abgeführt wird und
- mindestens ein Sensor (10, 11, 12, 14, 15) Messwerte erfasst, wobei die Messwerte einer Auswerteeinheit (7) zugeführt werden,

**dadurch gekennzeichnet, dass** die Auswerteeinheit (7) wenigstens die Wirkungsgrade der Pumpe (1) und der Energierückgewinnungseinheit (6) berechnet und als Sollwert eine optimale Ausbeute ermittelt, bei der sich die Anlage mit einem minimalen spezifischen Energiebedarf betreiben lässt, wobei in der Auswerteeinheit (7) ein funktionaler Zusammenhang zwischen spezifischem Energiebedarf, Ausbeute, Temperatur und Salzgehalt hinterlegt ist und , die Auswerteeinheit (7) mittels des osmotischen Druckes und den Reibungsverlusten den erforderliche Förderdruck bestimmt und das Minimum des Energieverbrauchs mittels eines Algorithmus ermittelt, der das Minimum des spezifischen Energiebedarfs als Funktion der Ausbeute errechnet, und die Abweichung des Istwerts vom Sollwert errechnet und in Abhängigkeit dieser Abweichung die Ausbeute variiert.

9. Verfahren nach Anspruch 8, **dadurch gekennzeichnet, dass** die Ausbeute über das Schluckvolumen der Energierückgewinnungseinheit (6) variiert wird.

10. Verfahren nach Anspruch 8 oder 9, **dadurch gekennzeichnet, dass** die Ausbeute über das Verdrängungsvolumen der Pumpe (1) variiert wird.

11. Verfahren nach einem der Ansprüche 8 bis 10, **dadurch gekennzeichnet, dass** die Auswerteeinheit (7) mittels eines Algorithmus die optimale Ausbeute aus dem funktionalen Zusammenhang berechnet.

**12.** Verfahren nach einem der Ansprüche 8 bis 11, **dadurch gekennzeichnet, dass** die Temperatur und/oder der Salzgehalt des Feedstroms (2) von Sensoren (10) erfasst werden und an die Auswerteeinheit (7) weitergeleitet werden, wobei die Auswerteeinheit (7) die optimale Ausbeute in Abhängigkeit der Temperatur und/oder des Salzgehaltes im Feedstrom (2) ermittelt.

**13.** Verfahren nach einem der Ansprüche 8 bis 12, **dadurch gekennzeichnet, dass** über einen Sensor (11) der Druck in der Zuführleitung des Feedstroms (2) von der Pumpe (1) zur Membraneinheit (3) erfasst wird und ein weiterer Sensor (12) den Druck in der Abführleitung des Retentatstroms (5) von der Membraneinheit (3) zur Energierückgewinnungseinheit (6) erfasst, wobei die Messwerte an die Auswerteeinheit (7) weitergeleitet werden und die Auswerteeinheit (7) den Druckverlust in der Membraneinheit (3) ermittelt.

**Claims**

**1.** Assembly for preparing a liquid by reverse osmosis, having a pump (1), a membrane unit (3), an energy recovery unit (6), at least one sensor (10, 11, 12, 14, 15) and an evaluation unit (7), the pump (1) feeding a feed stream (2) to the membrane unit (3) and the membrane unit (3) separating the feed stream (2) into a permeate stream (4) and a retentate stream (5), and the actual value of the yield of the assembly being given as a ratio of permeate stream (4) to feed stream (2), and the retentate stream (5) being fed to the energy recovery unit (6), measured values being measured by at least one sensor (10, 11, 12, 14, 15) and forwarded to an evaluation unit (7) **characterized by** an algorithm implemented in the evaluation unit (7), by means of which the evaluation unit (7) calculates at least the efficiency of the pump (1) and of the energy recovery unit (6) and determines an optimal yield as reference value, at which the assembly can be operated with a minimum specific energy requirement, wherein a functional relationship between specific energy requirement, yield, temperature and salt content is stored in the evaluation unit (7), and the evaluation unit (7) determines the necessary delivery pressure by means of the osmotic pressure and the frictional losses and determines the minimum of the energy consumption by means of the algorithm, which calculates the minimum of the specific energy requirement as a function of the yield, and calculates the deviation of the actual value from the reference value and varies the yield on the basis of this deviation.

**2.** Assembly according to Claim 1, **characterized in that** the yield is varied via the displacement of the energy recovery unit (6).

**3.** Assembly according to Claim 1 or 2, **characterized in that** the yield is varied via the displacement volume of the pump (1).

**4.** Assembly according to one of Claims 1 to 3, **characterized in that** the evaluation unit (7) calculates the optimal yield from the functional relationship by means of an algorithm.

**5.** Assembly according to one of Claims 1 to 4, **characterized in that** the salt content and/or the temperature of the feed stream (2) is measured by sensors (10) and forwarded to the evaluation unit (7), wherein the evaluation unit (7) determines the optimal yield as a function of the salt content and/or the temperature in the feed stream (2) .

**6.** Assembly according to one of Claims 1 to 5, **characterized in that** the pressure in the feed line of the feed stream (2) from the pump (1) to the membrane unit (3) is measured via a sensor (11), and a further sensor (12) measures the pressure in the discharge line of the retentate stream (5) from the membrane unit (3) to the energy recovery unit (6), wherein the measured values are forwarded to the evaluation unit (7) and the evaluation unit (7) determines the pressure loss in the membrane unit (3).

**7.** Assembly according to one of Claims 1 to 6, **characterized in that** the pump (1) is operatively connected to the energy recovery unit (6) via a connecting element (13).

**8.** Method for preparing a liquid,

    - a pump (1) feeding a feed stream (2) to a membrane unit (3),
    - a membrane unit (3) separating the feed stream (2) into a permeate stream (4) and a retentate stream (5), the actual value of the yield of the assembly being given as a ratio of permeate stream (4) to feed stream (2),
    - the retentate stream (5) from the membrane unit (3) being discharged to an energy recovery unit (6), and
    - at least one sensor (10, 11, 12, 14, 15) measuring measured values, the measured values being fed to an evaluation unit (7), **characterized in that** the evaluation unit (7) calculates at least the efficiency of the pump (1) and of the energy recovery unit (6) and determines as reference value an optimal yield at which the assembly can be operated with a minimal specific energy requirement, wherein

a functional relationship between specific energy requirement, yield, temperature and salt content is stored in the evaluation unit (7), and the evaluation unit (7) determines the necessary delivery pressure by means of the osmotic pressure and the frictional losses and determines the minimum of the energy consumption by means of an algorithm which calculates the minimum of the specific energy requirement as a function of the yield, and calculates the deviation of the actual value from the reference value and varies the yield on the basis of this deviation.

9. Method according to Claim 8, **characterized in that** the yield is varied via the displacement of the energy recovery unit (6).

10. Method according to Claim 8 or 9, **characterized in that** the yield is varied via the displacement volume of the pump (1).

11. Method according to one of Claims 8 to 10, **characterized in that** the evaluation unit (7) calculates the optimal yield from the functional relationship by means of an algorithm.

12. Method according to one of Claims 8 to 11, **characterized in that** the temperature and/or the salt content of the feed stream (2) is measured by sensors (10) and forwarded to the evaluation unit (7), wherein the evaluation unit (7) determines the optimal yield on the basis of the temperature and/or the salt content in the feed stream (2).

13. Method according to one of Claims 8 to 12, **characterized in that** the pressure in the feed line of the feed stream (2) from the pump (1) to the membrane unit (3) is measured via a sensor (11), and a further sensor (12) measures the pressure in the discharge line of the retentate stream (5) from the membrane unit (3) to the energy recovery unit (6), wherein the measured values are forwarded to the evaluation unit (7) and the evaluation unit (7) determines the pressure loss in the membrane unit (3).

**Revendications**

1. Installation de traitement d'un liquide par osmose inverse, comportant une pompe (1), une unité à membrane (3), une unité de récupération d'énergie (6), au moins un capteur (10, 11, 12, 14, 15) est une unité d'évaluation (7), dans laquelle la pompe (1) délivre un flux d'alimentation (2) à l'unité à membrane (3) et l'unité à membrane (3) sépare le flux d'alimentation (2) en influx de perméat (4) et un flux de rétentat (5), et la valeur instantanée du rendement de l'installation est obtenue en tant que rapport du flux de perméat (4) au flux d'alimentation (2) et le flux de rétentat (5) est délivré à une unité de récupération d'énergie (6), dans laquelle des valeurs de mesure sont détectées à l'aide d'au moins un capteur (10, 11, 12, 14, 15) et sont envoyées à une unité d'évaluation (7), **caractérisée par** un algorithme mis en oeuvre dans l'unité d'évaluation (7), au moyen duquel l'unité d'évaluation (7) calcule au moins le rendement de fonctionnement de la pompe (1) et de l'unité de récupération d'énergie (6) et détermine en tant que valeur nominale un rendement optimal pour lequel l'installation peut être mise en fonctionnement avec un besoin en énergie spécifique minimal, dans laquelle une relation fonctionnelle entre le besoin en énergie spécifique, le rendement, la température et la teneur en sel est stockée dans l'unité d'évaluation (7), et l'unité d'évaluation (7) détermine la pression d'entraînement nécessaire au moyen de la pression osmotique et des pertes par frottement et détermine la consommation d'énergie minimale au moyen de l'algorithme qui calcule le minimum du besoin spécifique en énergie en fonction du rendement, et calcule l'écart entre la valeur instantanée et la valeur nominale et fait varier le rendement en fonction dudit écart.

2. Installation selon la revendication 1, **caractérisée en ce que** le rendement est amené à varier au moyen du volume de déplacement de l'unité de récupération d'énergie (6).

3. Installation selon la revendication 1 ou 2, **caractérisée en ce que** le rendement est amené à varier au moyen du volume de refoulement de la pompe (1).

4. Installation selon l'une quelconque des revendications 1 à 3, **caractérisée en ce que** l'unité d'évaluation (7) calcule le rendement optimal au moyen d'un algorithme à partir de la relation fonctionnelle.

**5.** Installation selon l'une quelconque des revendications 1 à 4, **caractérisée en ce que** la teneur en sel et/ou la température du flux d'alimentation (2) sont détectées par des capteurs (10) et sont envoyées à l'unité d'évaluation (7), dans laquelle l'unité d'évaluation (7) détermine le rendement optimal en fonction de la teneur en sel et/ou de la température dans le flux d'alimentation (2).

**6.** Installation selon l'une quelconque des revendications 1 à 5, **caractérisée en ce que** la pression dans la ligne d'amenée du flux d'alimentation (2) de la pompe (1) à l'unité à membrane (3) est détectée par un capteur (11), et **en ce qu'**un autre capteur (12) détecte la pression dans la ligne de sortie du flux de rétentat (5) de l'unité à membrane (3) à l'unité de récupération d'énergie (6), dans laquelle les valeurs de mesure sont envoyées à l'unité d'évaluation (7) et l'unité d'évaluation (7) détermine la chute de pression dans l'unité à membrane (3).

**7.** Installation selon l'une quelconque des revendications 1 à 6, **caractérisée en ce que** la pompe (1) coopère avec l'unité de récupération d'énergie (6) par l'intermédiaire d'un élément de liaison (13).

**8.** Procédé de traitement d'un liquide, dans lequel

- une pompe (1) délivre un flux d'alimentation (2) à une unité à membrane (3),
- une unité à membrane (3) sépare le flux d'alimentation (2) en un flux de perméat (4) et un flux de rétentat (5), dans lequel la valeur instantanée du rendement de l'installation est obtenue comme étant le rapport du flux de perméat (4) au flux d'alimentation (2),
- le flux de rétentat (5) est évacué de l'unité à membrane (3) vers l'unité de récupération d'énergie (6) et
- au moins un capteur (10, 11, 12, 14, 15) détecte des valeurs de mesure, dans lequel les valeurs de mesure sont délivrées à une unité d'évaluation (7), **caractérisé en ce que** l'unité d'évaluation (7) calcule au moins le rendement de fonctionnement de la pompe (1) et de l'unité de récupération d'énergie (6) et détermine en tant que valeur nominale un rendement optimal pour lequel l'installation peut être mise en fonctionnement avec un besoin en énergie spécifique minimum, dans lequel

une relation fonctionnelle entre le besoin en énergie spécifique, le rendement, la température et la teneur en sel est stockée dans l'unité d'évaluation (7), et l'unité d'évaluation (7) détermine la pression d'entraînement nécessaire et le minimum de la consommation d'énergie au moyen de la pression osmotique et de la perte par frottement au moyen d'un algorithme qui calcule le minimum du besoin en énergie spécifique en fonction du rendement, et qui calcule l'écart entre la valeur instantanée et la valeur nominale et fait varier le rendement en fonction dudit écart.

**9.** Procédé selon la revendication 8, **caractérisé en ce que** le rendement est amené à varier par l'intermédiaire du volume de déplacement de l'unité de récupération d'énergie (6).

**10.** Procédé selon la revendication 8 ou 9, **caractérisé en ce que** le rendement est amené à varier par l'intermédiaire du volume de refoulement de la pompe (1).

**11.** Procédé selon l'une quelconque des revendications 8 à 10, **caractérisé en ce que** l'unité d'évaluation (7) calcule le rendement optimal au moyen d'un algorithme à partir de la relation fonctionnelle.

**12.** Procédé selon l'une quelconque des revendications 8 à 11, **caractérisé en ce que** la température et/ou la teneur en sel du flux d'alimentation (2) sont détectées par des capteurs (10) et sont envoyées à l'unité d'évaluation (7), dans lequel l'unité d'évaluation (7) détermine le rendement optimal en fonction de la température et/ou de la teneur en sel dans le flux d'alimentation (2).

**13.** Procédé selon l'une quelconque des revendications 8 à 12, **caractérisé en ce que** la pression dans la ligne d'amenée du flux d'alimentation (2) de la pompe (1) à l'unité à membrane (3) est détectée par un capteur (11) et **en ce qu'**un autre capteur (12) détecte la pression dans la ligne de sortie du flux de rétentat (5) de l'unité à membrane (3) à l'unité de récupération d'énergie (6), dans lequel les valeurs de mesure sont envoyées à l'unité d'évaluation (7) et l'unité d'évaluation (7) détermine la chute de pression dans l'unité à membrane (3).

Fig. 1

Fig. 2

EP 2 368 624 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007090406 A1
- WO 2010010243 A1
- US 3637081 A
- DE 2917058 A1
- WO 2010010243 A
- DE 2917058